# EUROPÄISCHE PATENTSCHRIFT

(11) **EP 0 479 987 B1**
(45) Veröffentlichungstag und Bekanntmachung des Hinweises auf die Patenterteilung: **26.10.1994**
(21) Anmeldenummer: 91907692.7
(22) Anmeldetag: 12.04.1991
(51) Int. Cl.: F24J 2/04

(54) **VAKUUM-RÖHREN-KOLLEKTOR**
VACUUM TUBE COLLECTOR
COLLECTEUR TUBULAIRE A VIDE

(30) Priorität: 30.04.1990 DE 9004917 U
(43) Veröffentlichungstag der Anmeldung: 15.04.1992
(73) Patentinhaber: PRINZ GMBH, 55442 Stromberg (DE)
(72) Erfinder: VAN ESDONK, Johannes, NL-5632 TT Eindhoven (NL); OBERMAYR, Eugen, D-8997 Hergensweiler (DE)
(74) Vertreter: Weiss, Ursula, Dr.
(86) Internationale Anmeldenummer: EP9100699
(87) Internationale Veröffentlichungsnummer: WO9117398

(56) Entgegenhaltungen:
- DE-A- 2 712 153
- DE-U- 8 913 387
- FR-A- 2 360 844
- FR-A- 2 434 347
- GB-A- 2 089 024
- US-A- 4 579 107
- Patent Abstracts of Japan, vol. 7, no. 31 (M-192) (1176) 8. Februar 1983 & JP-A-57 184 855 (MATSUSHITA DENKI SANGYO K.K.) 13. November 1982
- Patent Abstracts of Japan, vol. 8, no. 87 (M-291) (1524) 20. April 1984 & JP-A-59 4850 (SANYO DENKI K.K.) 11. Januar 1984

## Beschreibung

Die Erfindung betrifft einen Vakuum-Röhren-Kollektor mit einem Glasrohr, das an mindestens einem Ende mittels des Thermokompressionsverfahrens vakuumdicht verschlossen ist und eine Metallhülse mit Hydridmaterial enthält.

Aus dem DE-U-8913387 ist ein Vakuum-Röhren-Kollektor bekannt, bei dem das Glasrohr mittels des Thermokompressionsverfahrens vakuumdicht verschlossen ist.

Aus dem Dokument JP-A-57184855, Patent Abstract of Japan Vol. 7, Nr. 31 (M-192) (1176) ist ein Vakuum-Röhren-Kollektor mit einem Glasrohr bekannt, wobei sich in dem Glasrohr eine Metallhülse befindet, die Hydridmaterial enthält. Mit Hilfe entladener oder teilentladener Hydridmaterialien wird bei diesem Dokument ein bestimmter Vakuumdruck gehalten, der die Isolation der Röhre garantiert.

Die der Erfindung zugrunde liegende Aufgabe besteht darin, einen Vakuum-Röhren-Kollektor vorzuschlagen, dessen Inneres auf einen sehr niedrigen Druck gebracht und gehalten werden kann.

Diese Aufgabe wird erfindungsgemäß dadurch gelöst, daß bei dem Aufheizprozeß während der Herstellung des Vakuum-Röhren-Kollektors aus dem Hydridmaterial, das sich in der Metallhülse befindet, durch Teildesorbierung Wasserstoffgas ausströmt, wobei dieses Wasserstoffgas in einem Gasspülvorgang die inneren Oberflächen reinigt und Restgase entfernt, wobei nach dem Verschließen und Beendigen des Heizprozesses im Inneren der Röhre durch die Getterwirkung des teildesorbierten Hydridspeichers ein Vakuumdruck von etwa 10⁻⁴ bis 10⁻⁶ mbar entsteht.

Hydridmaterial besitzt die Eigenschaft, unter bestimmten thermischen Bedingungen Gase, vorzugsweise Wasserstoff, zu speichern. Es kann somit die Funktion eines Latentspeichers für Gase übernehmen (Hydridspeicher).

Vorzugsweise ist die Metallhülse wurstähnlich oder dosenähnlich kalt abgelenkt und offen. Diese Öffnung wird vorzugsweise dadurch verursacht, daß ein Spalt an der Metallhülse offengelassen wird, wenn die Metallhülse kalt abgelenkt wird.

Vorzugsweise ist die Metallhülse innerhalb des Glasrohres am Absorber entgegengesetzt zur Ausspülöffung befestigt. Diese Befestigung ist zwischen Mitte und Ende des Absorbers am günstigsten.

Vorzugsweise ist der Vakuum-Röhren-Kollektor mit Meßrohren ausgestattet, die eine direkte Verbindung zum Vakuum besitzen, um die indirekte Messung des Vakuumdruckes zu ermöglichen.

Vorzugsweise ist das Glasrohr mit einem Thermokompressionsverfahren verschlossen.

Gemäß einer weiteren besonders bevorzugten Ausführungsform ist das Glasrohr mit einem optischen Vakuumindikationsmittel ausgestattet, das direkte Rückschlüsse auf die Vakuumqualität ermöglicht.

Bei der Herstellung des Vakuum-Röhren-Kollektors wird dieser zusammen mit der das Hydridmaterial enthaltenden Metallhülse aufgeheizt. Während dieses Aufheizens spült das aus dem Hydridmaterial ausströmende Wasserstoffgas die inneren Oberflächen und reinigt diese. Restgase werden entfernt.

Anschließend wird die Röhre evakuiert und verschlossen. Es ist jedoch auch möglich, ohne zusätzliche Evakuierungsmaßnahmen allein durch den in dem Glasrohr befindlichen Hydridspeicher (Metallhülse mit Hydridmaterial) nach dem Aufheizen eine Evakuierung zu erreichen. Der Hydridspeicher wirkt als Evakuierungshilfe im Sinne einer Gasspülung. Der teildesorbierte Hydridspeicher besitzt Getterwirkung.

Der nach dem Verschließen im Inneren der Röhre entstehende Vakuumdruck beträgt etwa 10⁻⁴ bis 10⁻⁶ mbar. Dieser Druck kann beispielsweise durch die beschriebenen Meßrohre indirekt gemessen werden. Durch die beschriebenen optischen Vakuumindikationsmittel können Rückschlüsse auf die Vakuumqualität gezogen werden.

Die Erfindung wird nun anhand der beigefügten Zeichnungen näher erläutert.
Es zeigen:
Figur 1 eine perspektivische Ansicht des Vakuum-Röhren-Kollektors,
Figur 2 einen Längsschnitt durch die Metallhülse und
Figur 3 einen Längsschnitt durch einen weiteren Vakuum-Röhren-Kollektor.

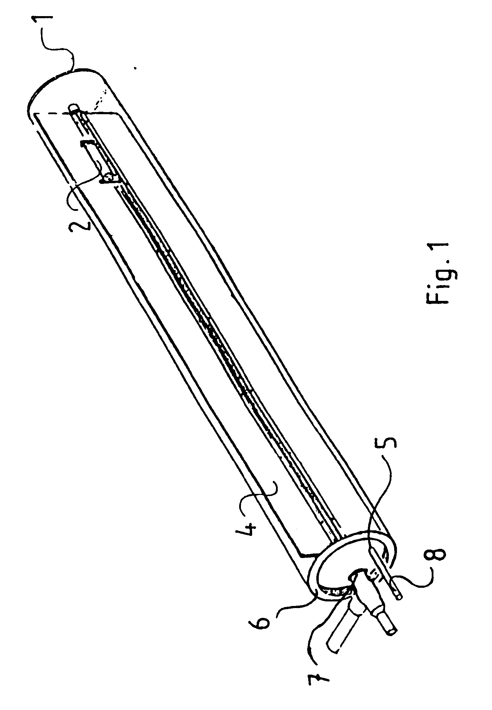

Der in Figur 1 dargestellte Vakuum-Röhren-Kollektor weist das Glasrohr 1 auf, das an mindestens einem Ende mittels des Thermokompressionsverfahrens vakuumdicht verschlossen ist. An einem Ende weist das Glasrohr 1 die Metallkappe 6 auf. Mittig führt durch die Metallkappe 6 das Koaxialrohrsystem 7, mit dem der im Inneren des Glasrohres 1 angeordnete Absorber 4 beispielsweise mit Wasser versorgt werden kann. Diese Metallkappe 6 wurde mit dem Glasrohr 1 mittels des Thermokompressionsverfahrens verbunden.

In dieser Metallkappe 6 befindet sich die Ausspülöffnung 5, durch die das Evakuierrohr 8 in das Innere des Glasrohres 1 gelangt.

Innerhalb dieses Glasrohres 1 befindet sich die Metallhülse 2, die Hydridmaterial enthält. Diese Metallhülse 2 ist innerhalb des Glasrohres 1 am Absorber 4 entgegengesetzt zu der Ausspülöffnung 5 befestigt. Ferner kann der Vakuum-Röhren-Kollektor mit Meßrohren ausgestattet sein, die eine direkte Verbindung zum Vakuum besitzen, um die indirekte Messung des Vakuumdruckes zu ermöglichen. Weiterhin ist es möglich, daß das Glasrohr 1 mit einem optischen Vakuumindikationsmittel ausgestattet ist, das direkte Rückschlüsse auf die Vakuumqualität ermöglicht.

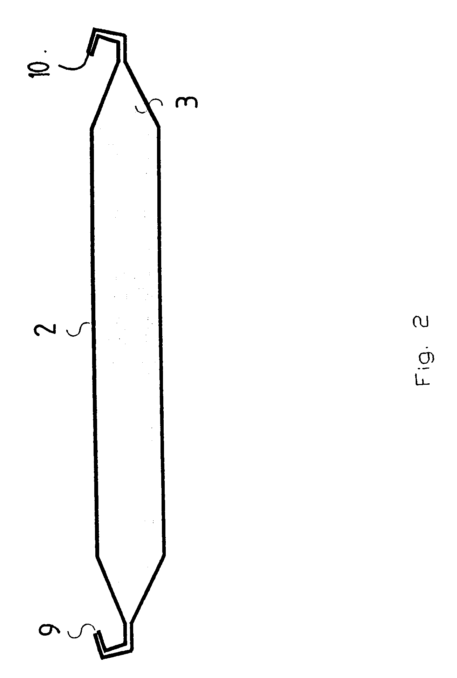

In Figur 2 ist ein Längsschnitt durch die Metallhülse 2 dargestellt. Diese Metallhülse 2 enthält das Hydridmaterial 3. Sie ist wurstähnlich kalt abgelenkt, wobei an beiden Enden die Schlitze 9 bzw. 10 offen gelassen wurden.

Das Hydridmaterial 3 besitzt die Eigenschaft, unter bestimmten thermischen Bedingungen Gase, vorzugsweise Wasserstoff, zu speichern, wieder abzugeben und wieder zu speichern. Bei der Herstellung des in Figur 1 dargestellten Vakuum-Röhren-Kollektors wird dieser zusammen mit der das Hydridmaterial 3 enthaltenden Metallhülse 2 aufgeheizt. Während dieses Aufheizens spült das aus dem Hydridmaterial 3 ausströmende Wasserstoffgas die inneren Oberflächen und reinigt diese. Restgase werden entfernt.

Anschließend wird die Röhre mittels des Evakuierrohres 8 evakuiert und verschlossen. Es ist jedoch auch möglich, ohne zusätzliche Evakuierungsmaßnahmen, allein durch den in dem Glasrohr 1 befindlichen Hydridspeicher (Metallhülse 2 mit Hydridmaterial 3), nach dem Aufheizen eine Evakuierung zu erreichen. Der Hydridspeicher wirkt als Evakuierungshilfe im Sinne einer Gasspülung.

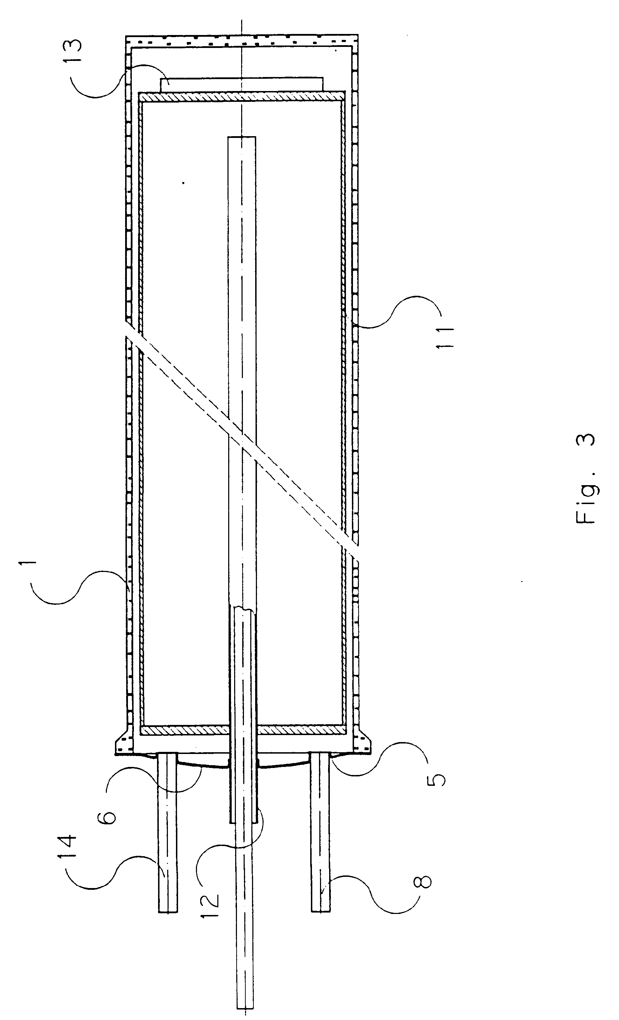

Der in Figur 3 im Längsschnitt dargestellte Vakuum-Röhren-Kollektor weist das Glasrohr 1 auf, das an mindestens einem Ende mittels des Thermokompressionsverfahrens vakuumdicht verschlossen ist. Bezüglich der Beschreibung dieses Verschlusses mittels der Metallkappe 6 wird auf die Beschreibung von Figur 1 hingewiesen. Zusätzlich ist die Metallkappe 6 mit dem Meßrohr 14 versehen, da es eine direkte Verbindung zum Vakuum besitzt.

Innerhalb dieses Glasrohres 1 ist das Absorberrohr 11 angeordnet, in dessen Inneren sich das Koaxialrohranschlußsystem 12 befindet.

Am Boden des Absorberrohres 11 ist die Metallhülse 13 befestigt. Diese Metallhülse 13 ist dosenähnlich (dosenförmig) und enthält das Hydridmaterial.

## Patentansprüche

1. Vakuum-Röhren-Kollektor mit einem Glasrohr, das an mindestens einem Ende mittels des Thermokompressionsverfahrens vakuumdicht verschlossen ist und eine Metallhülse mit Hydridmaterial enthält,
dadurch gekennzeichnet,
daß bei dem Aufheizprozeß während der Herstellung des Vakuum-Röhren-Kollektor aus dem Hydridmaterial (3), das sich in der Metallhülse (2, 13) befindet, durch Teildesorbierung Wasserstoffgas ausströmt, dieses Wasserstoffgas in einem Gasspülvorgang die inneren Oberflächen reinigt und Restgase entfernt, wobei nach dem Verschließen und Beendigen des Heizprozesses im Inneren der Röhre durch die Getterwirkung des teildesorbierten Hydridspeichers ein Vakuumdruck von etwa 10⁻⁴ bis 10⁻⁶ mbar entsteht.

2. Vakuum-Röhren-Kollektor nach Anspruch 1
dadurch gekennzeichnet,
daß die Metallhülse (2, 13) wurstähnlich oder dosenähnlich kalt abgelenkt und offen ist.

3. Vakuum-Röhren-Kollektor nach Anspruch 1 oder 2,
dadurch gekennzeichnet,
daß die Metallhülse (2, 13) innerhalb des Glasrohres (1) am Absorber entgegengesetzt zur Ausspülöffnung (5) befestigt ist.

4. Vakuum-Röhren-Kollektor nach Anspruch 1, 2 oder 3,
dadurch gekennzeichnet,
daß er mit Meßrohren ausgestattet ist, die eine direkte Verbindung zum Vakuum besitzen, um die indirekte Messung des Vakuumdruckes zu ermöglichen.

5. Vakuum-Röhren-Kollektor nach mindestens einem der vorherigen Ansprüche,
dadurch gekennzeichnet,
daß das Glasrohr (1) mit einem Thermokompressionsverfahren verschlossen ist.

6. Vakuum-Röhren-Kollektor nach mindestens einem der vorherigen Ansprüche,
dadurch gekennzeichnet,
daß das Glasrohr (1) mit einem optischen Vakuumindikationsmittel ausgestattet ist, das direkte Rückschlüsse auf die Vakuumqualität ermöglicht.

## Claims

1. A vacuum tube collector having a glass tube which is vacuum-tightly closed at at least one end by means of the thermocompression method and contains a metal case with hydride material characterised in that in the heating process during production of the vacuum tube collector hydrogen gas flows by partial desorption out of the hydride material (3) which is disposed in the metal case (2, 13), said hydrogen gas in a gas flushing operation cleans the inside surfaces and removes residual gases, wherein after the closure step and termination of the heating process a vacuum pressure of about 10⁻⁴ to 10⁻⁶ mbar is produced in the interior of the tube by the getter action of the partially desorbed hydride storage means.

2. A vacuum tube collector according to claim 1 characterised in that the metal case (2, 13) is deflected cold in a sausage-like or can-like configuration and is open.

3. A vacuum tube collector according to claim 1 or claim 2 characterised in that the metal case (2, 3) is fixed within the glass tube (1) on the absorber in opposite relationship to the scavenging opening (5).

4. A vacuum tube collector according to claim 1, claim 2 or claim 3 characterised in that it is equipped with measuring tubes which have a direct communication with the vacuum to permit indirect measurement of the vacuum pressure.

5. A vacuum tube collector according to at least one of the preceding claims characterised in that the glass tube (1) is closed by a thermocompression method.

6. A vacuum tube collector according to at least one of the preceding claims characterised in that the glass tube (1) is fitted with an optical vacuum indication means which permits direct conclusions about the quality of the vacuum.

## Revendications

1. Collecteur de tubes à vide comportant un tube en verre, qui est fermé de manière étanche au vide à au moins une extrémité, par le procédé de thermocompression, et qui comprend une douille métallique contenant un hydrure, caractérisé en ce que lors de l'opération de chauffage, pendant la fabrication du collecteur de tubes à vide, du gaz hydrogène est dégagé, par désorption partielle, par l'hydrure (3) se trouvant dans la douille métallique (2, 13), ce gaz hydrogène nettoie, lors d'une opération de lavage au gaz, les surfaces intérieures et élimine les gaz résiduels, un vide d'environ 10⁻⁴ à 10⁻⁶ mbars s'établissant après fermeture et achèvement de l'opération de chauffage à l'intérieur du tube, par effet Getter de l'accumulateur d'hydrure partiellement désorbé.

2. Collecteur de tubes à vide selon la revendication 1, caractérisé en ce que la douille métallique (2, 13) est repliée à froid à la manière d'un boudin ou d'une boîte et est ouverte.

3. Collecteur de tubes à vide selon les revendications 1 ou 2, caractérisé en ce que la douille métallique (2, 13) est fixée à l'intérieur du tube en verre (1) sur l'absorbeur, à l'opposé de l'ouverture de lavage (5).

4. Collecteur de tubes à vide selon les revendications 1, 2 ou 3, caractérisé en ce qu'il est équipé de tubes de mesure qui ont une liaison directe avec le vide, afin de permettre la mesure indirecte de la pression de vide.

5. Collecteur de tubes à vide selon l'une au moins des revendications précédentes, caractérisé en ce que le tube en verre (1) est fermé par un procédé de thermocompression.

6. Collecteur de tubes à vide selon l'une au moins des revendications précédentes, caractérisé en ce que le tube en verre (1) est équipé d'un moyen optique d'indication de vide, qui permet de faire des déductions directes sur la qualité du vide.
